# EUROPÄISCHE PATENTSCHRIFT

(11) **EP 0 565 515 B1**
(45) Veröffentlichungstag und Bekanntmachung des Hinweises auf die Patenterteilung: **21.06.1995**
(21) Anmeldenummer: 93890073.5
(22) Anmeldetag: 05.04.1993
(51) Int. Cl.: F02F 3/26, F02F 1/42, F02B 23/06, F02B 23/02

(54) **Diesel-Brennkraftmaschine mit einem im Kolben gebildeten Brennraum**
Diesel engine with combustion chamber in the piston
Moteur diesel avec chambre de combustion dans le piston

(30) Priorität: 09.04.1992 AT 757/92
(43) Veröffentlichungstag der Anmeldung: 13.10.1993
(73) Patentinhaber: AVL Gesellschaft für Verbrennungskraftmaschinen und Messtechnik mbH.Prof.Dr.Dr.h.c. Hans List, 8020 Graz (AT)
(72) Erfinder: Wünsche, Peter, Dipl.-Ing., A-8010 Graz (AT); Schukoff, Bruno, A-8010 Graz (AT); Landfahrer, Klaus, Dr., A-8020 Graz (AT)
(74) Vertreter: Krause, Walter, Dr. Dipl.-Ing.

(56) Entgegenhaltungen:
- EP-A- 0 105 934
- EP-A- 0 344 598
- FR-A- 2 089 693

## Beschreibung

Die Erfindung betrifft eine Diesel-Brennkraftmaschine mit einem oder mehreren hin- und hergehenden Kolben, mit hängenden Ventilen, deren Ventilachsen eine geringe Neigung gegenüber einem zur Zylinderachse parallelen Geraden durch die Ventiltellermitte aufweisen, wobei die Ventilschäfte von der durch die Zylinderachse und die Kurbelwellenachse aufgespannten Mittelebene wegweisen.

Um bei Diesel-Brennkraftmaschinen, insbesondere mit direkter Einspritzung, möglichst niedrige Abgasemissionen zu erreichen, muß der Schadraum in der oberen Totpunktstellung des Kolbens gering gehalten werden. Dieser Schadraum setzt sich aus den Volumina Feuersteg, Kolbenspalt und Ventiltaschen zusammen.

Die üblicherweise senkrecht gestellten Ventile bei planer Zylinderkopffläche und Kolbenoberseite erfordern Ventiltaschen im Kolben und/oder Anfasungen im Zylinderkopf im Bereich der Ventilsitze, um den Freigang der Ventile sicherzustellen und (bei zurückgesetzten Ventilsitzen) den Gaswechsel durch die Kanäle nicht Zu behindern. Fine plane Zylinderkopffläche sowie eine ebene Kolbenoberseite ist zur Minimierung des Kolbenspaltvolumens notwendig.

Es ist bekannt, bei Brennkraftmaschinen, insbesondere auch für selbstzündende Kraftstoffe und direkter Einspritzung, die Ventile schräg zur Zylinderachse zu stellen, z.B. um bei luftgekühlten Zylinderköpfen mehr Querschnitt für die Kühlluftdurchströmung zu erhalten.

Die EP-OS 0 345 431 zeigt etwa eine Diesel-Brennkraftmaschine, deren Ventilachsen eine geringe Neigung von 6° gegenüber einer zur Zylinderachse parallelen Geraden durch die Ventiltellermitte aufweisen, wobei die Ventilschäfte von der durch die Zylinderachse und die Kurbelwellenachse aufgespannten Mittelebene wegweisen. Um geneigte Ventile verwenden zu können, ist die durch den Zylinderkopf gebildete Brennraumdecke dachförmig gestaltet, wodurch ein relativ großes Schadraumvolumen in Kauf genommen werden muß. Gerade bei Brennkraftmaschinen für selbstzündende Kraftstoffe wirkt sich aber ein zu großer Schadraum in der oberen Totpunktstellung des Kolbens sehr nachteilig auf die Abgasemissionen aus.

Aus der DE-OS 29 18 097 ist weiters eine Brennkraftmaschine mit Funkenzündung bekannt, bei der die Ventilachsen ebenfalls in einem Winkel von 6° bis 9° zur Zylinderachse geneigt sind. Dabei ist die Zylinderkopffläche und die Kolbenoberseite als Kugelkalotte ausgeführt, sodaß die Ventilachsen etwa durch die Kalottenmitte führen, um das Volumen der Fasen um die Ventilsitze im Zylinderkopf zu minimieren. Der Kolben dieser Brennkraftmaschine weist eine Kolbenmulde und Ventiltaschen im Kolbenboden auf, wobei sich die Ventiltaschen mit der Kolbenmuldenkante verschneiden. Zur Erzielung einer zufriedenstellenden Dauerhaltbarkeit des Kolbens muß diese Verschneidung entsprechend abgerundet werden, was sich aber nachteilig auf das Schadraumvolumen auswirkt. Deshalb ist auch diese Konstruktion nicht geeignet, um bei Diesel-Brennkraftmaschinen die Abgasqualität befriedigend zu verbessern.

Aufgabe der Erfindung ist es, diese Nachteile zu vermeiden, und das Schadraumvolumen bei gleichzeitiger Verminderung der Gaswechselverluste zu minimieren.

Erfindungsgemäß ist vorgesehen, daß die Neigung der Ventilachsen nur etwa 3° beträgt, und Ventiltaschen in einem planen Kolbenboden vorgesehen sind, welche im gleichen Ausmaß wie die Ventilachsen geneigt sind, so daß die Ventiltaschen an der der Mittelebene abgewandten Seite die größte Tiefe aufweisen, wobei die Ventiltaschen in Richtung zur Mittelebene an der Oberseite des Kolbens noch vor dem Rand einer Kolbenmulde im Kolbenboden auslaufen. Die größte Tiefe der Ventiltaschen entspricht der bei heute üblicher Auslegung. Durch die kleineren Ventiltaschen und die nicht unterbrochene Kanten der Kolbenmulde wird die durch die Kolbenbewegung verursachte Quetschströmung weniger gestört. Diese ist erwünscht, da sie den Muldendrall verstärkt. Der beispielsweise vom Einlaßkanal gebildete Drall, kann entsprechend reduziert werden, wodurch die Gaswechselverluste verringert werden.

Bei einer vorteilhaften Ausführungsvariante ist vorgesehen, daß die Ventiltaschen im Kolbenboden Zum Feuersteg des Kolbens auslaufend ausgebildet sind. Auf diese Weise kann der zulässige Wandabstand der Ventilteller zur Kolbenlauffläche reduziert werden, da die Einhaltung des notwendigen Wandabstandes nur beim geöffneten Ventil sichergestellt sein muß. Damit können größere Ventilquerschnitte gewählt werden. Da die Ventilfedern gegenüberstehender Ventile auseinanderrücken, steht mehr Platz, etwa für die Anordnung der Einspritzdüse, zur Verfügung.

In weiterer Ausgestaltung der Erfindung ist vorgesehen, daß die im gleichen Ausmaß wie die Ventilachsen geneigten Fasen im Zylinderkopf an der der Mittelebene zugewandten Seite die größten Tiefen aufweisen, wobei ein Bereich der Fasen symmetrisch zu einer Ebene durch die Zylinderachse und die Ventiltellermitte über der Kolbenmulde ausgebildet ist. Die um den Ventilsitz notwendige Fase erzeugt damit an der der Mittelebene abgewandten Seite ein dementsprechend geringes Schadraumvolumen. Die über der Kolbenmulde liegenden Bereiche der Fase von großer Tiefe sind nicht mehr als Schadraum wirksam.

Eine weitere Verkleinerung des Schadraumes kann dadurch erfolgen, daß die Steuerung der Ventile so ausgelegt ist, daß die Ventilhubkurven der Kolbenhubkurve im Bereich der Ventilüberschneidung annähernd folgen. Durch diese Maßnahme kann die Ventiltaschentiefe weiter reduziert werden. Heute übliche Ventilhubkurven haben nur einen Punkt größter Annäherung zur Kolbenhubkurve. Eine bekannte Maßnahme, die Ventiltaschentiefe zu vermindern, ist die Verringerung der Ventilüberschneidung bei unveränderten Hubkurven. Durch diese Maßnahme werden allerdings die Steuerzeiten nachteilig beeinflußt. Die vorgeschlagene Auslegung der Ventilhubkurve erlaubt bei reduzierter Ventiltaschentiefe die gleiche Fläche unter der Ventilhubkurve.

Im folgenden wird die Erfindung anhand der Zeichnungen näher erläutert. Es zeigen:
- Fig. 1: ein Ausführungsbeispiel der Frfindung nach dem Schnitt I-I in Fig. 2,
- Fig. 2: eine Ansicht eines Kolbens nach der Linie II-II in Fig. 1,
- Fig. 3: ein Diagramm für die Kolben- und Ventilbewegung.

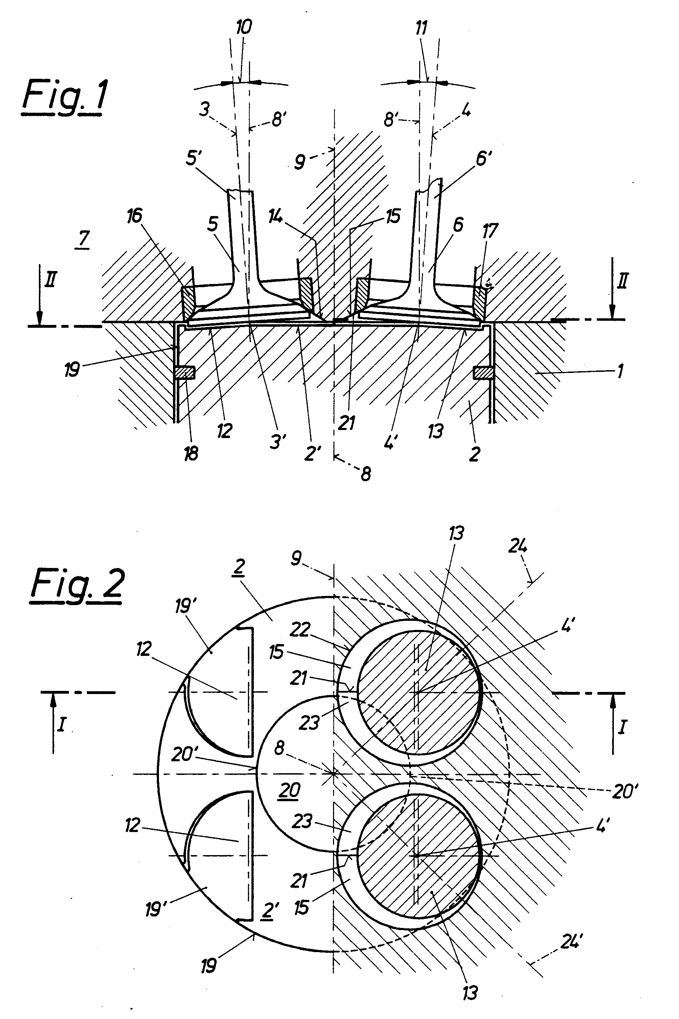

Fig. 1 zeigt einen sich in einem Zylinder 1 im oberen Totpunkt befindenden Kolben 2. Die Achsen 3 bzw. 4 für Ein- und Auslaßventil 5 bzw. 6 sind im planen Zylinderkopf 7 gegenüber einer zur Zylinderachse 8 parallelen Geraden 8' durch die Ventiltellermitte 3' bzw. 4' in einem Winkel 10 bzw. 11 von 3° leicht geneigt. Dabei weisen die Ventilschäfte 5' und 6' von einer durch die Zylinderachse 8 und die Kurbelwellenachse (nicht sichtbar) aufgespannten Mittelebene 9 weg. Die gleichsinnig zu den Ventilachsen 3 und 4 geneigten Ventiltaschen im Kolben 2 sind mit 12 und 13, die im gleichen Ausmaß geneigten Fasen im Zylinderkopf mit 14 und 15 bezeichnet. 16 und 17 stellen die Ventilsitze für Einlaßventil 5 bzw. Auslaßventil 6 dar. Der oberhalb des Kompressionsringes 18 liegende Feuersteg 19 ist ein Teil des Schadraumes.

Wie in Fig. 2 ersichtlich, ist der durch die Ventiltaschen 12 und 13 im Kolben 2 gebildete Schadraum dadurch reduziert, daß die Ventiltaschenanarbeit geneigt erfolgt und mit dem Rand 20' der Kolbenmulde 20 nicht verschneidet. Diese Ventiltaschen 12 und 13 sind zum Feuersteg 19 hin an der Stelle 19' durchbrochen. Die Fasen 14 und 15 sind so gestaltet, daß sie die größte Tiefe 21 an der der Mittelebene 9 zugewandten Seite 22 aufweisen, wobei die Bereiche 23 mit größerer Tiefe als in anderen Teilen der Fasen 14, 15 symmetrisch zu einer Ebene 24 bzw. 24' durch die Zylinderachse 8 und die Ventiltellermitte 3' bzw. 4' über der Kolbenmulde 20 liegen.

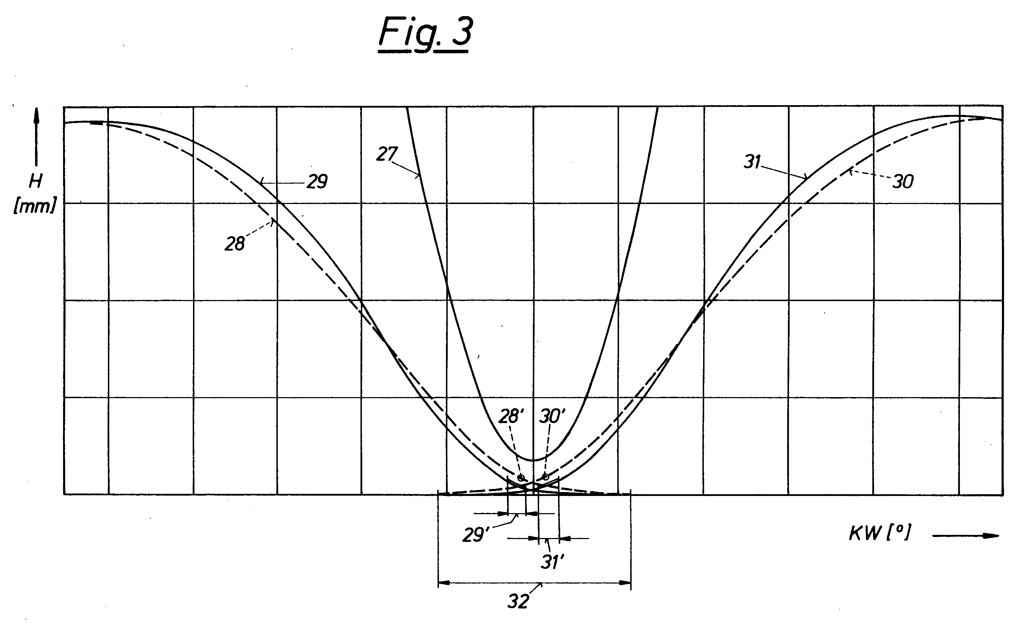

In Fig. 3 ist der Hub H des Kolbens 2 sowie von einem Einlaßventil 5 und einem Auslaßventil 6 über dem Kurbelwinkel KW dargestellt. Die Kurve 27 stellt dabei den Hub des Kolbens 2 dar. Die gestrichelte Kurve 28 zeigt den Hub eines herkömmlich gesteuerten Auslaßventiles 6, die gestrichelte Kurve 30 zeigt den Hub eines herkömmlich gesteuerten Einlaßventiles 5. Bei konventioneller Steuerung gibt es für jede Ventilhubkurve 28 bzw. 30 nur einen Punkt 28 ' bzw. 30' größter Annäherung an die Hubkurve 27 des Kolbens. Kurve 31 stellt eine Hubkurve eines Einlaßventiles 5 und Kurve 29 eine Hubkurve eines Auslaßventiles 6 nach der erfindungsgemäß vorgeschlagenen Steuerung der Ventile 5 und 6 dar, welche im Bereich 31' bzw. 29' der Ventilüberschneidung 32 annähernd der Hubkurve 27 des Kolbens 2 folgen.

## Patentansprüche

1. Diesel-Brennkraftmaschine mit einem oder mehreren hin- und hergehenden Kolben, mit hängenden Ventilen, deren Ventilachsen (3, 4) eine geringe Neigung (10, 11) gegenüber einer zur Zylinderachse (8) parallelen Geraden (8') durch die Ventiltellermitte (3', 4') aufweisen, wobei die Ventilschäfte (5', 6') von der durch die Zylinderachse (8) und die Kurbelwellenachse aufgespannten Mittelebene (9) wegweisen, **dadurch gekennzeichnet**, daß die Neigung (10, 11) der Ventilachsen (3, 4) nur etwa 3° beträgt, und Ventiltaschen (12, 13) in einem planen Kolbenboden (2') vorgesehen sind, welche im gleichen Ausmaß wie die Venlilachsen (3, 4) geneigt sind, so daß die Ventiltaschen (12, 13) an der der Mittelebene (9) abgewandten Seite die größte Tiefe aufweisen, wobei die Ventiltaschen (12, 13) in Richtung zur Mittelebene (9) an der Oberseite des Kolbens (2) noch vor dem Rand (20') einer Kolbenmulde (20) im Kolbenboden (2') auslaufen.

2. Brennkraftmaschine nach Anspruch 1, **dadurch gekennzeichnet**, daß die Ventiltaschen (12, 13) im Kolbenboden (2') zum Feuersteg (19) des Kolbens (2) hin auslaufend ausgebildet sind.

3. Brennkraftmaschine mit Fasen um die Ventilsitze in Zylinderkopf, nach Anspruch 1 oder 2, **dadurch gekennzeichnet**, daß die im gleichen Ausmaß wie die Ventilachsen (3, 4) geneigten Fasen (14, 15) im Zylinderkopf an der der Mittelebene (9) zugewandten Seite die größten Tiefen (21) aufweisen, wobei ein Bereich (23) der Fasen (14, 15) symmetrisch zu einer Ebene (24 bzw. 24') durch die Zylinderachse (8) und die Ventiltellermitte (3' bzw. 4') über der Kolbenmulde ausgebildet ist.

4. Brennkraftmaschine nach einem der Ansprüche 1 bis 3, **dadurch gekennzeichnet**, daß die Steuerung der Ventile (5, 6) so ausgelegt ist, daß die Ventilhubkurven (29, 31) der Kolbenhubkurve (27) im Bereich (29', 31') der Ventilüberschneidung (32) annähernd folgen.

## Claims

1. Diesel engine with one or more reciprocating pistons and overhead valves, of which the axes (3, 4) are slightly inclined (10, 11) with respect to a straight line (8') through the centre of the valve head (3', 4') parallel to the axis (8) of the cylinder, the valve stems (5', 6') leaning away from the central plane (9) containing the axis (8) of the cylinder and the axis of the crankshaft, characterised in that the inclination (10, 11) of the axes (3, 4) of the valves amounts to only about 3° and valve pockets (12, 13) are provided in a flat piston crown (2') and inclined to the same extent as the axes of the valves, so that the valve pockets (12, 13) have their maximum depth at those sides of them furthest from the central plane (9), the valve pockets (12, 13) running out or terminating in a direction towards the central plane (9) on the crown of the piston (2) before the edge (20') of a trough (20) in the crown (2') of the piston.

2. Engine according to claim 1, characterised in that the valve pockets (12, 13) in the crown (2') of the piston are formed to lead into the top land (19) of the piston (2).

3. Engine with bevels around the valve seatings in the cylinder head according to claim 1 or 2, characterised in that the bevels (14, 15) in the cylinder head which are inclined to the same extent as the axes (3, 4) of the valve have their greatest depths (21) at those sides which are nearer the central plane (9), a region (23) of the bevels (14, 15) being formed symmetrically with a respect to a plane (24, or 24') through the axis (8) of the cylinder and the centres (3' and 4') of the valve heads over the trough in the piston.

4. Engine according to one of claims 1 to 3, characterised in that the actuation of the valves (5, 6) is arranged so that the valve stroke curves (29, 31) almost follow the stroke curve (27) of the piston in the region (29', 31') of valve overlap (32).

## Revendications

1. Moteur à combustion interne diesel avec un ou plusieurs pistons en va-et-vient, avec des soupapes en tête, dont les axes de soupape (3, 4) ont une faible inclinaison (10, 11), vis-à-vis d'une droite (8') parallèle à l'axe du cylindre (8) et traversant le centre de la tête de soupape (3', 4'), tandis que les tiges de soupape (5', 6') s'écartent du plan moyen (9) passant par l'axe du cylindre (8) et l'axe du vilebrequin, caractérisé en ce que l'inclinaison (10, 11) des axes de soupape (3, 4) ne se monte qu'à environ 3°, et des poches de soupape (12, 13) sont prévues sur une tête de piston plane (2'), lesquelles sont inclinées de la même quantité que les axes de soupape, de sorte que les poches de soupape (12, 13) comportent du côté éloigné du plan médian (9) la profondeur la plus grande, tandis que les poches de soupape (12, 13) s'étendent en direction du plan médian (9) sur la face supérieure du piston (2) en avant du bord (20') d'une cavité du piston (20) sur la tête de piston (2').

2. Moteur à combustion interne selon la revendication 1, caractérisé en ce que les poches de soupape (12, 13) sont réalisées sur la tête de piston (2') en s'étendant vers l'espace de combustion (19).

3. Moteur à combustion interne avec des chanfreins autour des sièges de soupape dans la culasse, selon les revendications 1 ou 2, caractérisé en ce que les chanfreins (14, 15) dans la culasse sont inclinés de la même mesure que les axes de soupape (3, 4) et comportent les profondeurs les plus grandes (21) du côté tourné vers le plan médian (9), tandis qu'une zone (23) des chanfreins (14, 15) est réalisée symétriquement par rapport à un plan (24 ou 24') passant par l'axe du cylindre (8) et les centres des têtes de soupape (3' ou 4') au-dessus de la cavité du piston.

4. Moteur à combustion interne selon une des revendications 1 à 3, caractérisé en ce que la commande des soupapes (5, 6) est conçue de manière que les courbes de course de soupape (29, 31) suivent la courbe de course du piston (27) dans la zone (29', 31') de recoupement des soupapes (32).
